# EUROPEAN PATENT APPLICATION

(11) **EP 1 384 408 A1**
(43) Date of publication of application: **28.01.2004**
(21) Application number: 03075093.9
(22) Date of filing: 10.01.2003
(51) Int. Cl.: A21C 3/08

(54) **Twisting method and device for dough products**

(30) Priority: 24.07.2002 NL 1021144
(71) Applicant: Tromp Holding B.V., 4207 HE Gorinchem (NL)
(72) Inventor: Tromp, Peter Bastiaan, 4241 EB Arkel (NL)
(74) Representative: 't Jong, Bastiaan Jacob

(57) **Abstract**

The invention relates to a method for twisting elongate dough products (4) and a device (1) therefor. A supplied dough product (4) is herein engaged at least at two positions in a longitudinal direction. The dough product (4) is twisted by applying torsion to a dough product around a longitudinal axis at least at a first position. The twisted product (18) is then discharged. The invention is characterized by engaging the dough product (4) on at least two longitudinal sides, which lie substantially parallel to the longitudinal axis, with a first respectively a second speed relative to the longitudinal axis of the dough product. By engaging on more than two longitudinal sides it is possible to prevent curvature of the dough product in a transverse direction.

## Description

The invention relates to a method for twisting elongate dough products, comprising of engaging a dough product at least at two positions in the longitudinal direction of the dough product and twisting the dough product by applying torsion to a dough product around a longitudinal axis at least at a first position. The invention also relates to a twisting device.

It is known to twist dough products manually. The unbaked, flexible, elongate dough product is held at a first position with one end the other outer end is rolled by hand over a table. There herein occurs a torsion of the dough product about the longitudinal axis, whereby the dough product acquires a determined added value. Twisting can take place manually or mechanically. This method has the drawback that the dough product deforms in a transverse direction during the torsion. Holding the dough product at the first position and moving the dough product at the second position results in a curvature in the longitudinal direction. Such curved dough products may cause jamming of a machine during further processing.

The object of the invention is to provide a method wherein less deformation in the dough product occurs in a transverse direction. This object is achieved according to the invention by engaging the dough product on at least two longitudinal sides, which lie substantially parallel to the longitudinal axis, with a first respectively a second speed relative to the longitudinal axis of the dough product. The dough product is hereby engaged on two sides and is twisted about the longitudinal axis by the different engaging speeds. Instead of being twisted on a fixed surface the dough product is now engaged on two sides and thereby twisted. Engagement in this manner results in a reduced deformation in the transverse direction of the dough product.

The dough product is preferably transported with a transporting speed. This transporting speed is then a component of the first and/or second engaging speed. A continuous method is hereby provided wherein dough products are fed in on one side and discharged in twisted state on the other side.

In a preferred embodiment the first speed is higher than the transporting speed and the second speed is lower than the transporting speed. The difference between the speeds and the transporting speed is hereby used to twist the dough product. The difference in engaging speed and transporting speed results in the torsion around the longitudinal axis.

In a preferred embodiment the difference between the first speed and the transporting speed is substantially equal to the difference between the second speed and the transporting speed. Such a difference in speed causes the dough product to twist around its longitudinal axis while the dough product moves at a transporting speed, without the twisting significantly affecting the transporting speed. The moving product is twisted without transverse movement of the dough product occurring therein. The dough products can hereby be twisted while moving close together, one after another. The method according to the invention hereby becomes less expensive, faster and more efficient.

The dough product is preferably fed and discharged. The successive production of twisted dough products can hereby be realized.

The dough product is preferably engaged at a number of positions in the longitudinal direction of the dough product, wherein the engaging speeds determine a predetermined speed distribution. The speed distribution corresponds to the degree of torsion of the dough product over the length of the product. An outer end of the dough product will twist more than the centre of the dough product. The speed distribution is adapted hereto. A uniform torsion is hereby guaranteed. In addition, the dough product is supported at a plurality of points in the longitudinal direction. This can for instance be carried out with a rotating disc, wherein the radial speed distribution of the rotating disc forms an engagement of the dough product at different engaging speeds.

In a preferred embodiment the dough product is engaged on at least two longitudinal sides at different positions distributed over the length of the dough product in accordance with the speed distribution, which is such that the sum of engaging speeds on the first longitudinal side at the first position and the opposite longitudinal side at substantially the same position is substantially the same. A speed distribution of engaging speeds is hereby obtained on two longitudinal sides of the product which give the dough product a transporting speed and a torsion directed about the longitudinal axis. The invention now provides engaging speeds on two longitudinal sides at different locations in the longitudinal direction of the dough product, wherein the engaging speeds are such that the dough product is not deformed in the direction of the transporting speed. There occurs substantially no deformation in transverse direction, such as for instance curving of the dough product.

In a preferred embodiment a decoration is arranged on at least one longitudinal side of the dough product. The longitudinal side is a side parallel to the longitudinal axis of the dough product. Due to the twisting according to the invention a dough product is obtained wherein the decoration will also display a twist. The twisted dough product exhibits a helical decoration. This manner of application is particularly efficient and gives the product considerable added value.

It is noted that the longitudinal sides which are engaged are preferably two mutually opposite longitudinal sides. It is however also possible for another side to be engaged. The position of engagement in the longitudinal direction of the dough product at the first speed does not have to be the same as the position of engagement at the second speed.

The invention also relates to a twisting device for twisting dough products, comprising: a frame, feed means and discharge means for dough products mounted on the frame, drive means, and at least one twisting means which comprises at least one engaging means which can engage the dough product at least at two positions in the longitudinal direction of the dough product, and which is at least movable transversely of the longitudinal direction of the dough product. The twisting device according to the invention is characterized by the engaging means which engages on two longitudinal sides of the dough product and which is movable at a first respectively a second speed relative to the longitudinal direction of the dough product on the first side respectively the second side of the dough product. At least one engaging means is hereby present which can engage on two longitudinal sides of the dough product, for instance two mutually opposite longitudinal sides, and which brings about the twisting of the dough product owing to a difference in engaging speed of the engaging means.

An engaging means is preferably arranged which can guide the dough product in forward direction. During twisting the dough product is engaged and guided in forward direction. Infeed and outfeed can hereby take place at different locations, wherein the twisting takes place therebetween.

It is advantageous that a first engaging means can engage on the dough product substantially at a higher speed than the transporting speed and that a second engaging means can engage on the dough product substantially at a lower speed than the transporting speed. Two engaging means engaging on two longitudinal sides are hereby provided, wherein the two engaging means have different speeds. This speed is advantageously higher respectively lower than the transporting speed. There is in fact superimposition of speeds. There is a transporting speed and a negative or positive first and second engaging speed. This latter engaging speed is used to twist the elongate dough product.

The twisting means preferably comprises a number of engaging means, which are arranged adjacently of each other in substantially a longitudinal direction of the product for feeding in. The engaging means engage at a number of positions distributed along the length of the dough product. This enables a more uniform twisting of the dough product.

In a preferred embodiment the engaging means are movable in accordance with a predetermined speed distribution varying in the longitudinal direction of the dough product. The engaging means hereby engage on the dough product at an engaging speed which varies in the longitudinal direction of the dough product. The engaging speed, in particular the difference between the engaging speed and the transporting speed, is used to twist the dough product. The dough product is twisted more at least at one end than at the central part in the longitudinal direction of the dough product. The twisting brought about by the engaging speed will therefore have to be higher at this outer end. The speed distribution is modified thereto.

The engaging means preferably comprise belts or cords. Such engaging means can be made to move in accordance with the speed distribution in simple manner. The belts or cords engage on narrow parts of the dough product distributed over the longitudinal direction. Such belts or cords are also flexible, whereby little jamming will occur. An example of another engaging means also suitable for this invention is an engaging means in the form of a rotating disc, wherein use is made of the differences in speed of movement in the radial direction.

The belts or cords are preferably arranged rotatably around two shafts, which shafts are bearing-mounted on the frame, wherein a shaft comprises a conical wheel. The belts or cords which rotate around the shafts and are tensioned on the conical wheel, will move in accordance with a speed distribution. The conical wheel will cause the belts or cords tensioned round the thicker part of the cone to move faster than the belts or cords tensioned around the pointed part of the cone. This is an advantageous embodiment for obtaining a speed distribution of the engaging means over the longitudinal direction when making use of belts.

At least one of the engaging means for one of the two longitudinal sides of the dough product is preferably arranged on the frame for displacement in the transport direction. The engaging means for the longitudinal sides arranged opposite each other can thus be moved along/over each other, whereby the length of the path over which the engaging means are arranged opposite each other can be varied. The length of the path of the torsion, and hence of the twisting, can hereby be varied. The displacement in the transport direction has the result that the torsion of the dough product can be adapted.

One of the engaging means arranged opposite each other is preferably arranged on the frame for movement in the engaging direction. The space between engaging means is hereby adjustable. It is hereby possible to work with dough products of varying thickness. The engaging direction is the direction of the engaging means towards the longitudinal axis of the dough product.

The twisting device preferably comprises decorating means for applying a decoration to at least one longitudinal side of the elongate dough product. The twisted dough product will hereby display a helical decoration after processing by the twisting device. Poppy seed and such products can be used as decorating means.

The twisting device preferably comprises a cutting device for manufacturing elongate strips of dough. The twisting device is provided on the infeed side with a mass of dough product. The cutting device manufactures elongate strips of dough or elongate dough products. These dough products are subsequently further processed and twisted in the twisting device.

The invention will be further discussed on the basis of the annexed figures, in which:
- Figure 1: shows a perspective, partially cut-away view of the preferred embodiment according to the invention of the twisting device; and
- Figure 2: shows a partially cut-away perspective view of the side of the preferred embodiment of the invention.

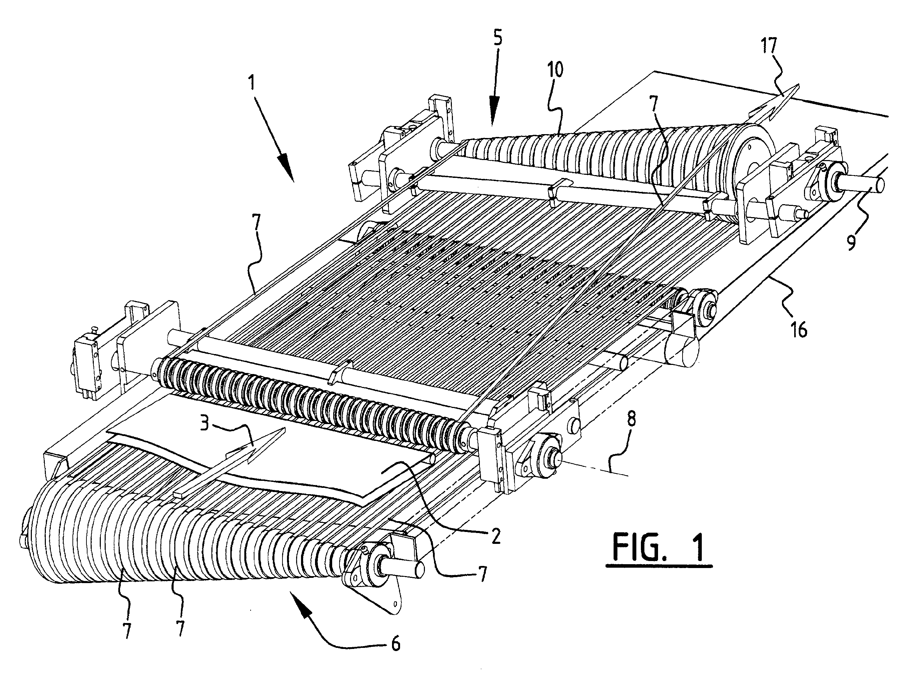

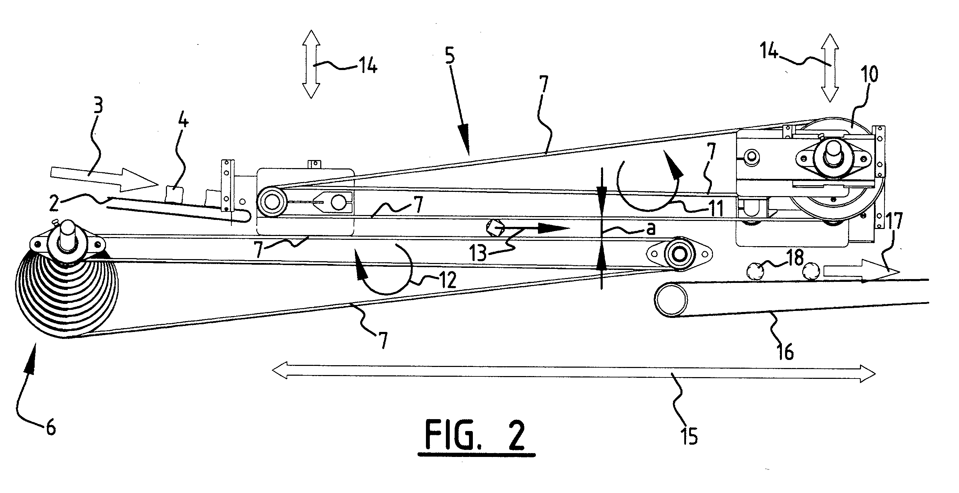

Figure 1 shows a twisting device 1 according to the invention, the frame of which is partially omitted. The elongate dough products are fed to twisting device 1 by means of a transport means 2, for instance a grille track, as according to arrow 3. Dough products 4 are shown in cross-section in figure 2 lying on conveyor belt 2. Shown is an elongate dough product with a square cross-section. The dough product has a longitudinal axis lying substantially transversely of the arrow 3. Dough product 4 lies with the length direction in the width of conveyor belt 2. It is possible to place a plurality of dough products adjacently of each other on the conveyor belt i.e. with the longitudinal axes mutually in line.

The twisting device comprises two twisting means 5,6 arranged opposite each other and each comprising a number of cords 7. The cords of the twisting means 5 are partially cut-away. The outermost cords are visible. The two twisting means are arranged one above the other, wherein between the respective twisting means there is arranged a space a which is hardly smaller than the thickness of a piece of dough. A dough product 3 which is fed between cords 7 will be engaged by the cords of both twisting means.

The cords 7 of twisting means 5 are arranged around two mounted shafts 8,9. The shafts are driven. Shaft 8 is placed substantially horizontally. Shaft 9 is placed at an angle. Twisting means 6 is constructed in the same manner.

Shaft 9 comprises a conical wheel 10. The cords are trained around this conical wheel. When shaft 9 is driven, the cords 7 will move around the conical wheel 10 at different speeds as according to arrow 11. In the width direction of twisting device 1 cords are provided adjacently of each other in accordance with a determined speed distribution. The cord around the thickest part of the cone will move more rapidly than the cord around the narrow part of the cone. The cords 7 of twisting means 6 move as according to arrow 12.

The cords of the twisting means 5,6 lying opposite each other have an opposing speed distribution. Both series of cords move such that a portion of dough 4 will be moved forward as according to arrow 13 between the cords. The speed distribution is such that a dough product 4 will move at a transporting speed. The transporting speed is substantially equal to the sum of the (engaging) speed of a cord on a longitudinal side of the dough product and the speed of the cord on the other longitudinal side divided by two. The difference between the (engaging) speed and the transporting speed of the dough product will twist the dough product around the longitudinal axis of dough product 3.

The dough product is engaged at a plurality of positions distributed over the longitudinal direction of the dough product by the cords of the twisting means. The speed distribution guarantees the transporting speed. The engagement of the cords on the dough product is such that the dough product can twist. The differences in speed between the engagement at a first position and at a second position distributed along the longitudinal direction of the dough product ensure different torsions of the product.

In the embodiment of figure 1 the cords of twisting means 5,6 lie opposite each other in each case. According to another embodiment, the cords can be a little offset.

Twisting means 5,6 are connected to the same drive and the shafts rotate at the same speed. The left-hand cord of the upper twisting means 5 moves the most slowly of the upper twisting means, while the left-hand cord of the lower twisting means 6 moves the fastest of the lower cords. The cords 7 of twisting means 5,6 can engage on two lengthwise or longitudinal sides of dough product 4.

The transporting speed 13 of a piece of dough situated between the twisting means is substantially the same as the speed of substantially the middle belt of the twisting means.

In a preferred embodiment the transporting speed 13 between the twisting means is higher than the supply speed 3. More space is hereby created between the successive strips of dough 4 between the twisting means 5,6.

It is possible to arrange a plurality of pieces of dough over the width direction of the twisting device. Owing to the speed distribution of the respective cords the pieces of dough will be twisted in uniform manner, irrespective of the positioning along the width of the twisting device, and pieces of dough will move at the same transporting speed. It is hereby possible to obtain a very high processing speed.

A dough product 4 can be engaged with the cords of the twisting means on two longitudinal sides. The difference in engaging speed between the upper cord and lower cord provides a torsion about the longitudinal direction of dough product 4.

The further the dough product is situated toward the outside of the twisting means 5,6, the more it will be twisted. The dough product will however always move at substantially the same transporting speed, whereby curvature of the dough product in transverse direction is prevented.

The space a between twisting means 5,6 can be adjusted. Twisting means 6 is connected for movement on the frame as according to vertical arrow 14. It is hereby possible to work with pieces of dough of differing thickness.

The length of the twisting path, i.e. the length of the path over which precisely said thickness (height) is defined between the twisting means, is adjustable. Twisting means 6 is movable in longitudinal direction as according to horizontal arrow 15.

According to figure 2, substantially rectangular pieces of dough are fed on a conveyor belt. It is also possible to supply pieces of dough with another cross-section, for instance of round cross-section.

Discharge means 16 is formed by a conveyor belt. After passing through the twisting path between the cords 7 of twisting means 5,6 the twisted dough product 18 is collected on belt 16 and discharged as according to arrow 17. The twisting of the pieces of dough is only shown schematically in the dough end product of figure 2.

Twisting device 1 can also be incorporated in a processing device for dough. An elongate dough layer is supplied to a cutting device, for instance a cutting device in accordance with the guillotine principle, which divides the dough layer into elongate portions. These portions are fed forward to the twisting device, wherein the portions are arranged in the width direction on the feed means. The portions are then twisted.

It is possible to decorate the dough products 4 on one or more sides with an edible marking, such as for instance with poppy seed. After twisting of the dough product the decoration has also been twisted in, wherein a product is obtained with a helical decoration.

## Claims

1. Method for twisting elongate dough products, comprising of engaging a dough product at least at two positions in a longitudinal direction of the dough product and twisting the dough product by applying torsion to the dough product around a longitudinal axis at least at a first position, **characterized by** engaging the dough product on at least two longitudinal sides, which lie substantially parallel to the longitudinal axis, with a first respectively a second speed relative to the longitudinal axis of the dough product.

2. Method as claimed in claim 1, **characterized by** transporting the dough product with a transporting speed during twisting.

3. Method as claimed in claim 2, **characterized in that** the first speed is higher than the transporting speed and the second speed is lower than the transporting speed.

4. Method as claimed in claim 3, **characterized by** substantially the same difference between the first speed respectively the second speed and the transporting speed.

5. Method as claimed in any of the claims 1-4, **characterized by** feeding and discharging of a dough product.

6. Method as claimed in any of the claims 1-5, **characterized by** engaging the dough product at a number of positions in the longitudinal direction of the dough product at engaging speeds in accordance with a predetermined speed distribution.

7. Method as claimed in claim 6, **characterized by** a substantially equal sum of the engaging speeds on the first longitudinal side and on the second, opposite longitudinal side.

8. Method as claimed in any of the claims 1-7, **characterized by** arranging a decoration on at least one longitudinal side of the dough product.

9. Twisting device for twisting dough products, comprising a frame, feed means and discharge means for dough products mounted on the frame, drive means, and at least one twisting means which comprises at least one engaging means which can engage the dough product at least at two positions in the longitudinal direction of the dough product, and which is at least movable transversely of the longitudinal direction of the dough product, **characterized in that** the engaging means can engage the dough product on two longitudinal sides and that the engaging means is movable at a first respectively a second speed relative to the longitudinal direction of the dough product on the first side respectively the second side of the dough product.

10. Twisting device as claimed in claim 9, **characterized in that** the engaging means can guide the dough product in a forward direction.

11. Twisting device as claimed in claim 9 or 10, **characterized in that** a first engaging means can engage the dough product substantially at a higher speed than the transporting speed and that a second engaging means can engage the dough product substantially at a lower speed than the transporting speed.

12. Twisting device as claimed in any of the claims 9-11, **characterized in that** the twisting means comprises a number of engaging means, which are arranged adjacently of each other substantially in the longitudinal direction of the dough product for feeding in.

13. Twisting device as claimed in any of the claims 9-12, **characterized in that** the engaging means are movable in accordance with a predetermined speed distribution varying in the longitudinal direction of the dough product.

14. Twisting device as claimed in claim 13, **characterized in that** the speed distribution of the engaging means on one longitudinal side is substantially complementary to the speed distribution of the engaging means on the other longitudinal side.

15. Twisting device as claimed in any of the claims 12-14, **characterized in that** the engaging means comprise cords.

16. Twisting device as claimed in claim 15, **characterized in that** the cords are arranged on the frame for rotation around two shafts, wherein a shaft comprises a conical wheel.

17. Twisting device as claimed in any of the claims 10-16, **characterized in that** at least one engaging means is arranged on the frame for displacement in the guiding direction.

18. Twisting device as claimed in any of the claims 10-17, **characterized in that** at least one engaging means is arranged on the frame for movement in a direction transversely of the guiding direction.

19. Twisting device as claimed in any of the claims 9-18, **characterized in that** the twisting device comprises decorating means for applying a decoration to at least one side of the elongate dough product.

20. Twisting device as claimed in any of the claims 9-11, **characterized in that** the twisting device comprises a cutting device for manufacturing elongate strips of dough.
